# FASCICULE DE BREVET EUROPEEN

(11) **EP 0 810 691 B1**
(45) Date de publication et mention de la délivrance du brevet: **21.04.1999**
(21) Numéro de dépôt: 97401133.0
(22) Date de dépôt: 23.05.1997
(51) Int. Cl.: H01R 11/14, B60M 1/22

(54) **Tête de contact et de suspension pour perche de court-circuit d'une caténaire**
Verbindungs- und Aufhängungskopf für eine Schaltstange einer Oberleitung
Contact- and suspension head for a hotstick for a caternary wire

(30) Priorité: 31.05.1996 FR 9606712
(43) Date de publication de la demande: 03.12.1997
(73) Titulaire: DUBUIS Société Anonyme, F-41007 Blois Cedex (FR)
(72) Inventeur: Courtois, Alain, 41000 Blois (FR); Huet, Kean-Pierre, 41000 Blois (FR)
(74) Mandataire: Chambon, Gérard

(56) Documents cités:
- FR-A- 1 527 777
- FR-A- 2 452 183
- FR-A- 2 585 517
- FR-A- 2 600 829

## Description

L'invention concerne une tête de contact et de suspension pour perche de court-circuit d'une caténaire ou plus précisément des fils conducteurs ou de contact de ladite caténaire.

Une caténaire assure de manière connue l'alimentation en courant du moteur d'une locomotive ou d'un tramway électrique.

A cet effet, la caténaire comporte un système de suspension pourvu d'un câble porteur principal et éventuellement d'un câble porteur auxiliaire, ainsi qu'un ou respectivement deux fils de contact destinés à coopérer avec le pantographe d'alimentation du moteur électrique.

Les lignes sont généralement en 25000 volts alternatif ou en 1500 volts continu et de forte intensité, les premières citées ayant généralement un seul fil de contact et les secondes deux fils de contact.

Pour l'entretien ou la réparation d'un tronçon de caténaire, outre le fait de couper le courant entre deux sous-stations d'alimentation, il y a lieu de protéger le personnel du chantier contre une remise sous tension accidentelle.

Pour cela, on isole ledit tronçon au moyen de deux perches destinées à réaliser une liaison électrique provisoire entre le ou les fils de contact et les rails de la voie ferrée.

De la sorte, on court-circuite tout courant intempestif, de même que tout courant permanent ou rémanent qui circule généralement dans les lignes même après coupure.

Une telle perche doit être facile et rapide à poser et à retirer, permettre un bon passage d'un courant électrique intempestif, sans se détériorer en temps normal par le passage des courants permanents et ce, en outre, dans des conditions parfois difficiles comme par exemple au cours de balancements ou d'oscillations de la perche, parallèlement ou perpendiculairement à la voie.

Avantageusement, la perche doit aussi pouvoir s'adapter à divers diamètres de fils de contact.

Une perche est généralement télescopique et en matériau isolant et comporte une tête de contact et de suspension.

La tête de contact comporte un support de fixation à la perche et une pièce conductrice qui est destinée à venir au contact des fils de contact de la caténaire et qui est reliée électriquement à un câble de liaison dont l'extrémité est prévue pour être mise à la terre et/ou généralement connectée aux rails.

Les têtes de contact existantes pour conducteurs aériens se présentent généralement sous la forme de crochets ou pinces rigides ou semi-rigides formant directement ou étant pourvus chacun d'une pièce conductrice rigide ou semi-rigide.

Lorsqu'il s'agit d'un simple crochet de suspension sans serrage, on comprend que non seulement la surface de contact entre la tête et le fil est limitée géométriquement à deux lignes, mais elle peut encore être réduite jusqu'à deux points en cas de balancement de la perche parallèlement à la voie.

Il existe aussi une tête munie d'un moyen de serrage et de plusieurs gorges de divers diamètres.

Un tel système est lourd et présente une surface de contact assez réduite qui peut entraîner rapidement sa détérioration lors du passage d'un courant permanent.

En outre, une utilisation pour un diamètre de fil non prévu entraîne le risque que celui-ci ne vienne se loger sans serrage dans une gorge correspondant à un diamètre immédiatement supérieur.

Le document FR-2 452 183 A décrit quant à lui un dispositif pourvu d'un étrier articulé en matériau isolant, qui est destiné à venir entourer le conducteur et se fixer par crochetage, tandis que le contact électrique est assuré par un sabot de contact. On comprend aisément que la mise en place et le retrait d'un tel dispositif ne sont pas simples et rapides.

C'est pourquoi l'invention propose une tête de contact et de suspension qui est notamment remarquable, contrairement à l'art connu, en ce que la pièce conductrice est constituée par un conducteur souple et déformable, disposé à l'intérieur de la partie recourbée d'un crochet, la fixation dudit conducteur et dudit crochet étant réalisée au voisinage de leurs extrémités respectives tandis que la longueur du conducteur souple comprise entre ses fixations avec le crochet est plus courte que la longueur du crochet, considéré mis à plat et mesuré entre lesdites fixations, de telle sorte que ledit conducteur peut entourer partiellement un ou plusieurs fils de contact de diamètres divers de la caténaire en s'adaptant à leur contour et en assurant ainsi la connexion électrique et la suspension de la perche.

Ainsi, non seulement la tête de perche assure une grande surface de contact, même en cas d'oscillations de la perche, parallèlement ou perpendiculairement à la voie ou encore autour de la perche elle-même, mais elle s'adapte en outre naturellement à divers diamètres et même à plusieurs fils de contact.

De plus, un tel système constitue un moyen amortisseur qui empêche la perche de sauter sur le ou les fils de contact si ceux-ci sont mis en mouvement.

Avantageusement, le conducteur souple se présente sous la forme.d'une bande et de préférence encore, sous forme d'une tresse métallique.

Selon un mode de réalisation, le crochet est également constitué en matériau conducteur comme du laiton. Ainsi, non seulement le crochet est résistant mais il peut assurer le passage du courant vers le câble de liaison en cas de rupture du conducteur souple.

On peut aussi prévoir que le support soit pourvu d'une antenne en matériau conducteur et fusible afin de permettre préalablement à l'installation de la perche, de tester par contact la présence d'un courant dans le ou les fils de contact à court-circuiter, ladite antenne étant détruite en cas de présence d'un courant suffisant.

L'invention sera bien comprise à la lecture de la description qui va suivre et qui se réfère aux dessins annexés dans lesquels:
- la figure 1 montre une perche complète mise en place et connectée aux rails d'une voie ferrée,
- la figure 2 montre en perspective une tête de perche selon l'invention,
- les figures 3 à 5 montrent la tête de la figure 1 utilisée respectivement sur un fil de gros diamètre, sur un fil de plus petit diamètre et sur une ligne double à deux fils de contact.

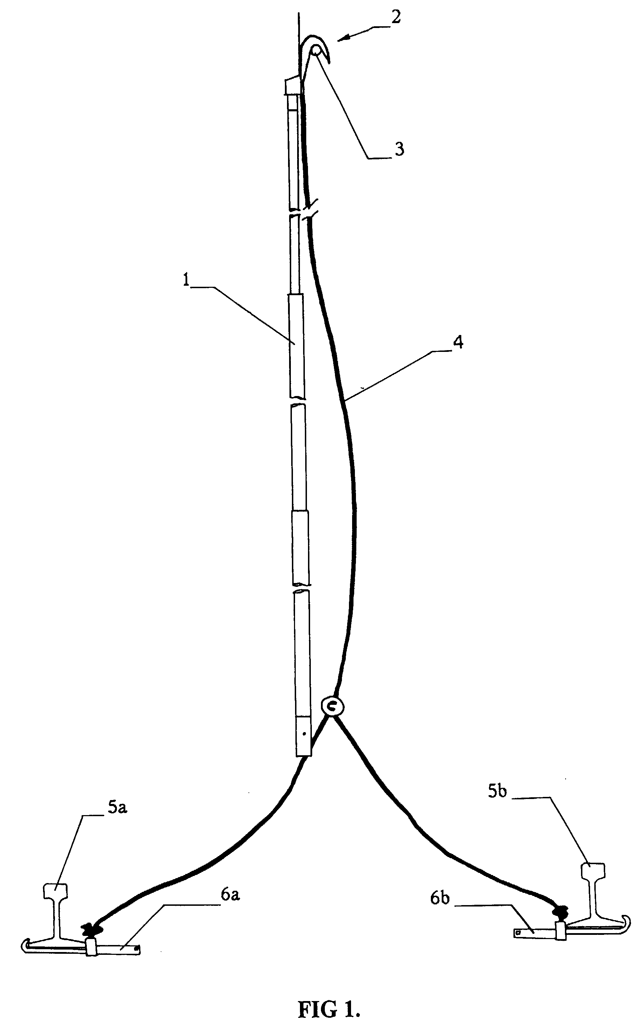

Sur la figure 1, on peut voir une perche 1 télescopique pourvue d'une tête 2 de contact et de suspension sur un fil 3 de contact et comportant un câble de liaison 4 destiné à être connecté, comme déjà dit, aux rails 5a, 5b de la voie ferrée concernée, au moyen, par exemple, de mains 6a, 6b dites de mise au rail.

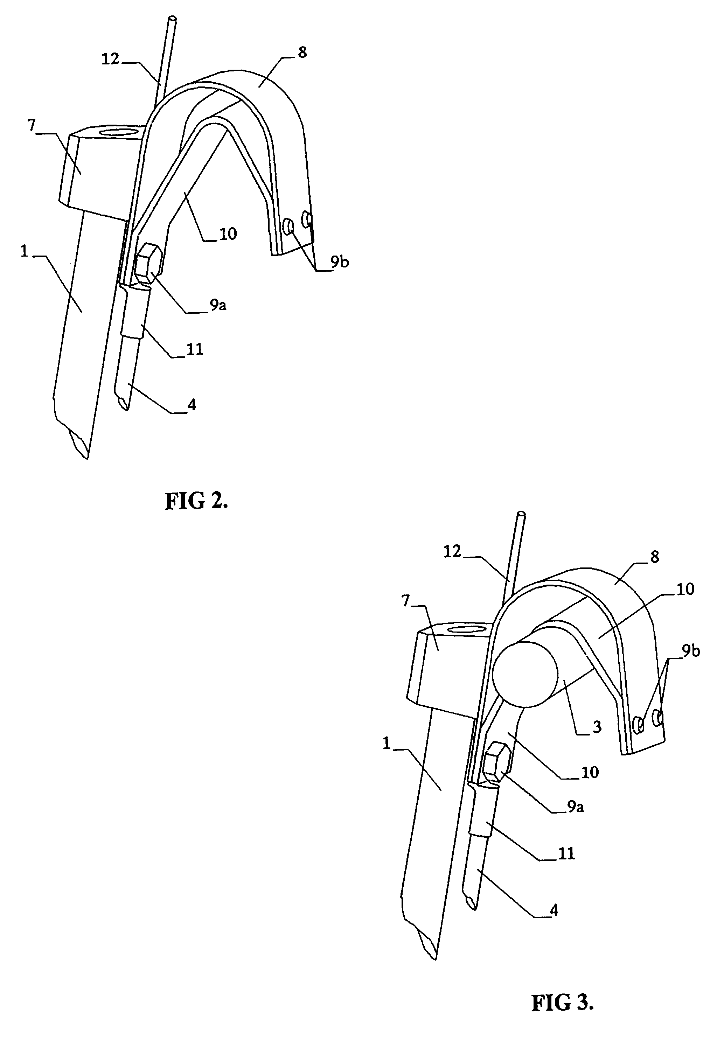

Sur les figures 2 à 5, on peut voir une tête 2 de perche 1 selon l'invention comportant un support 7 de fixation à ladite perche 1, ledit support 7, par exemple en aluminium, étant fixé ou solidaire d'un crochet 8 par exemple en laiton.

Du côté intérieur et aux extrémités du crochet 8, est fixé par ses extrémités, au moyen par exemple de vis et écrous 9a, 9b, un conducteur 10 souple et déformable, par exemple sous forme d'une tresse de fils de cuivre étamés.

Le crochet 8 et le conducteur 10 sont reliés électriquement au câble de liaison 4 au moyen d'une cosse 11 tandis que le support 7 comporte une antenne 12 remplaçable, en métal fusible et en particulier en acier inoxydable, pour tester préalablement les fils comme déjà dit.

Comme le montrent bien les dessins, la longueur du conducteur 10 mesurée entre ses moyens de fixation 9a, 9b est plus courte que la longueur du crochet 8 considéré mis à plat et mesuré entre lesdits moyens de fixation 9a, 9b.

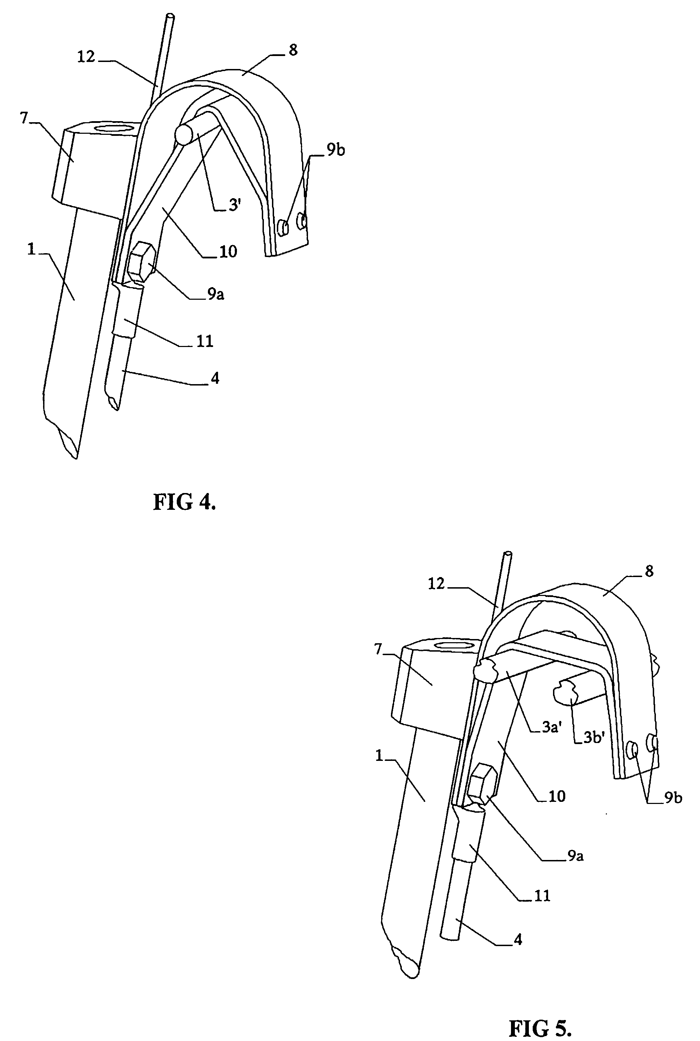

De la sorte, on peut constater la parfaite adaptabilité de la tête selon l'invention qui peut être suspendue sur un fil 3 de gros diamètre (figure 3) ou un fil de plus petit diamètre 3' (figure 4) ou encore sur deux fils 3'a, 3'b (figure 5).

Outre l'adaptation automatique et immédiate précitée aux divers diamètres, on constate sur les dessins, les bonnes surfaces de contact obtenues.

On comprend facilement que les contacts sont bien conservés, même si la perche bouge, et qu'en outre, la tête avec son conducteur 10 permet d'assurer un certain amortissement.

## Revendications

1. Tête de contact et de suspension (2) pour perche (1) de court-circuit des fils de contact (3, 3', 3'a, 3'b) d'une caténaire, comportant un support de fixation (7) à la perche (1) et une pièce conductrice qui est destinée à venir au contact desdits fils de contact (3, 3', 3'a, 3'b) de la caténaire et qui est reliée électriquement à un câble (4) de liaison, tête de contact caractérisée en ce que la pièce conductrice est constituée par un conducteur (10) souple et déformable, disposé à l'intérieur de la partie recourbée d'un crochet (8), la fixation dudit conducteur (10) et dudit crochet (8) étant réalisée au voisinage de leurs extrémités respectives tandis que la longueur du conducteur souple comprise entre ses fixations (9a, 9b) avec le crochet est plus courte que la longueur du crochet, considéré mis à plat et mesuré entre lesdites fixations (9a,9b), de telle sorte que ledit conducteur peut entourer partiellement un ou plusieurs fils de contact de diamètres divers de la caténaire en s'adaptant à leur contour et en assurant ainsi la connexion électrique et la suspension de la perche.

2. Tête de contact et de suspension selon la revendication 1, caractérisée en ce que le conducteur (10) souple se présente sous la forme d'une bande.

3. Tête de contact et de suspension selon la revendication 2, caractérisée en ce que le conducteur (10) souple est une tresse métallique.

4. Tête de contact et de suspension selon l'une des revendications 1 à 3, caractérisée en ce que le crochet (8) est également constitué en matériau conducteur.

5. Tête de contact et de suspension selon l'une des revendications 1 à 4, caractérisée en ce que le support de fixation (7) est pourvu d'une antenne (12) en matériau conducteur et fusible afin de permettre préalablement à l'installation de la perche, de tester par contact la présence d'un courant dans le ou les fils de contact (3, 3', 3'a, 3'b) à court-circuiter, ladite antenne (12) étant détruite en cas de présence d'un courant suffisant.

## Patentansprüche

1. Kontakt- und Aufhängekopf (2) für eine Stange (1) zum Kurzschließen der Fahrdrähte (3, 3'. 3'a. 3'b) einer Oberleitung mit einem an der Stange (1) angeordneten Befestigungsstück (7) und einem Leiterstück, welches dazu bestimmt ist, mit den besagten Fahrdrähten (3, 3', 3'a, 3'b) der Oberleitung in Kontakt zu kommen und das elektrisch an ein Verbindungskabel (4) angeschlossen ist, dadurch gekennzeichnet, daß das Leiterstück durch einen flexiblen und verformbaren Leiter (10) gebildet wird, der innerhalb des gekrümmten Teils eines Hakens (8) angeordnet ist, wobei die Befestigung des besagten Leiters (10) und des besagten Hakens (8) aneinander in der Nähe ihrer jeweiligen Enden verwirklicht ist, während die Länge des flexiblen Leiters, gemessen zwischen seinen Befestigungsstellen (9a, 9b) am Haken kürzer ist als die Länge des Hakens, in eine Ebene abgewickelt betrachtet und gemessen zwischen den besagten Befestigungsstellen (9a, 9b) derart, daß der Leiter einen oder mehrere Fahrdrähte der Oberleitung mit unterschiedlichen Durchmessern teilweise umfassen kann, indem er sich an ihre Kontur anpaßt und somit die elektrische Verbindung und die Aufhängung der Stange sicherstellt.

2. Kontakt- und Aufhängekopf nach Anspruch 1, dadurch gekennzeichnet, daß der flexible Leiter (10) die Form eines Bandes aufweist.

3. Kontakt- und Aufhängekopf nach Anspruch 2, dadurch gekennzeichnet, daß der flexible Leiter (10) ein Metallgeflecht ist.

4. Kontakt- und Aufhängekopf nach einem der Ansprüche 1 bis 3, dadurch gekennzeichnet, daß der Haken (8) ebenfalls aus leitendem Material besteht.

5. Kontakt- und Aufhängekopf nach einem der Ansprüche 1 bis 4, dadurch gekennzeichnet, daß das Befestigungsstück (7) mit einer Antenne (12) aus leitendem und schmelzbarem Material versehen ist, um es zu ermöglichen, vor der Installierung der Stange mittels Berührung das Vorhandensein eines Stroms in dem Fahrdraht oder den Fahrdrähten (3, 3', 3'a, 3'b), die kurzgeschlossen werden sollen, zu überprüfen, wobei im Falle des Vorhandenseins eines ausreichenden Stroms die besagte Antenne (12) zerstört wird.

## Claims

1. Contact and suspension head (2) for a rod (1) for short-circuiting the contact wires (3, 3', 3'a, 3'b) of a catenary, comprising a support for fixture (7) to the rod (1) and a conducting part which is designed to come into contact with said contact wires (3, 3', 3'a, 3'b) of the catenary and which is connected electrically to a connecting cable (4), said contact head being characterised in that the conducting part is constituted by a flexible and deformable conductor (10) disposed inside the curved portion of a hook (8), the fixture of said conductor (10) and of said hook (8) being effected in the vicinity of their respective ends, whereas the length of the flexible conductor between its fixtures (9a, 9b) with the hook is shorter than the length of the hook considered when flattened and measured between said fixtures (9a, 9b), such that said conductor can partially surround one or more contact wires of diverse diameters of the catenary while adapting to their contour and thus effecting the electrical connection and the suspension of the rod.

2. Contact and suspension head according to claim 1, characterised in that the flexible conductor (10) takes the form of a strip.

3. Contact and suspension head according to claim 2, characterised in that the flexible conductor (10) is a metal braid.

4. Contact and suspension head according to one of claims 1 to 3, characterised in that the hook (8) is also made of a conducting material.

5. Contact and suspension head according to one of claims 1 to 4, characterised in that the support for fixture (7) is provided with an antenna (12) made of fusible conducting material so that the presence of a current in the contact wire or wires (3, 3', 3'a, 3'b) to be short-circuited can be tested by contact prior to the installation of the rod, said antenna (12) being destroyed in the case of the presence of a sufficient current.
